# EUROPEAN PATENT APPLICATION

(11) **EP 0 831 079 A1**
(43) Date of publication of application: **25.03.1998**
(21) Application number: 97402171.9
(22) Date of filing: 18.09.1997
(51) Int. Cl.: C06B 31/28, C01C 1/18, C06B 23/00

(54) **Porous prilled ammonium nitrate**

(30) Priority: 19.09.1996 ZA 9607922
(71) Applicant: SASOL CHEMICAL INDUSTRIES LIMITED, Johannesburg 2196, Gauteng (ZA)
(72) Inventor: Bals, Edwin, Sasolburg 9570 (ZA); Breedt, Jacobus, Sasolburg 9570 (ZA); Spiteri, William Luciano, La Montagne, Pretoria 0001 (ZA); Goosen, Adriaan Johannes, Randburg 2194 (ZA)
(74) Representative: Phélip, Bruno

(57) **Abstract**

A porous prilled product such as ammonium nitrate is disclosed which is in the form of a crystalline matrix which has hollow microspheres incorporated in the matrix in a concentration of from 0,01 to 500 parts per million. A method for producing the aforesaid product is also disclosed in which the microspheres are incorporated in the ammonium nitrate during the prilling of the latter.

## Description

### INTRODUCTION

THIS invention relates to a porous prilled product, particularly porous prilled ammonium nitrate.

In this specification the term 'porous prilled' is used to refer to a particulate product which, in the case of ammonium nitrate, contains less than 0.5%, preferably less than 0,2%, water on a mass per mass basis.

### BACKGROUND OF THE INVENTION

Porous prilled ammonium nitrate is commonly employed as one of the components of explosive compositions used in the mining industry.

Thus, for example, porous prilled ammonium nitrate is mixed with fuel oil to form the explosive composition known as ammonium nitrate fuel oil (ANFO), and with an emulsion to form heavy ANFO, with or without the prior addition of fuel.

For reason of cost efficiency, and/or in order to control the total explosive power of a particular charge, a low density ammonium nitrate prill is often preferred and various methods have been devised for producing such a product. In generate such methods relate to the prilling of less concentrated solutions of ammonium nitrate.

In a more recent method, such lower density is achieved by ingraining a density reducing composition, such as hollow microspheres, with the ammonium nitrate particles in a concentration in the order of 0,05 - 10% mass per mass.

Because it was realized that an increase in the concentration of the microspheres would lead to a decrease in the density of the resulting prill, concentrations away from the lower end of the aforesaid range was favoured.

Applicant has now found that certain advantageous blasting results can be achieved with an explosive composition including such a product containing such microsphere in a much lower concentration, and it is an object of the present invention to provide such a product and its method of preparation.

### SUMMARY OF THE PRESENT INVENTION

According to the invention a porous prilled product, particularly porous prilled ammonium nitrate, in the form of a crystalline matrix is provided which has hollow microspheres incorporated in the matrix in a concentration of from 0,01 to 500 parts per million.

Further according to the invention the porous prilled product comprises ammonium nitrate.

Applicant has found that such product, when compared with similar products which do not include such microspheres, not only has a somewhat lower density while maintaining an acceptable mechanical strength, but also that the microspheres impart a much higher sensitivity to detonation initiation to an explosive composition such as ANFO or heavy ANFO, which includes such a product.

The presence of such microspheres also improves the consistency of the detonation process because the build-up to full detonation from initiation is faster. It is also found that using such a product in perimeter blasting in tunnelling and bulk blasting in broken ground, unlike the standard product, gives rise to acceptable post blast results. Due to complete detonation, the presence of NOx resulting from partial detonation in broken ground, also disappears.

It will be appreciated that although the upper end of the microsphere concentration in a product according to the present invention approaches the lower end of that of the aforesaid earlier method, the average man skilled in this art who knew about such earlier method would not have ventured down to such lower concentrations because he would have been aware of the fact that the object of the earlier method, i.e. to produce a prill of lower density than that of the standard, would not be achieved with such a lower concentration of microspheres.

The enhanced blasting results obtained with a blasting composition containing a product with the lower microspheres concentration according to the invention would accordingly have been completely unexpected to such a man skilled in the art.

Further according to the invention the microspheres may comprise at least one of the following: polymer balloons; glass balloons; hollow metal spheres; natural porous products such as Perlite; cenospheres such as fly ash floaters, or the like.

Preferably the microspheres have the following physical properties in the final product:
- Size :: 5 - 1500 micro metre.
- Density range :: 0,015 - 0,39 gram per cm³.
- Temperature stability :: Stable at process temperatures of 130-170°C for a sufficient time to effect prilling during the prilling process.
- Breaking strength :: Able to withstand at least 100 kg/cm² force or, able to regain its shape after impact deformation.

It will be appreciated that when the microspheres comprise polymer balloons, they are so chosen that they will expand to the sizes specified above during the prilling of the ammonium nitrate.

Preferably the microspheres comprise polymer microballoons of which the size in the prilled product is between 2,0 and 150 microns.

Applicant has found the product known as Expancel 910 extremely useful in this regard although the scope of the invention is not intended to be restricted to such a compound.

Expancel 910 comprises hollow microspheres having a polymer shell comprising a co-polymer of acrylonitrile and polyvinylidene dichloride together with a blowing agent comprising a suitable hydrocarbon such as isobutane. Under the prilling conditions described below, the microspheres expand to a size of about 50 microns. Although the spheres will compress under the influence of a shock wave, they regain their shape afterwards.

Further according to the invention the porous prilled ammonium nitrate also includes lime stone.

In a preferred form of the invention the porous prilled ammonium nitrate may include from 70,0% to 99,9% mass per mass of ammonium nitrate containing microspheres as disclosed above, and from 30,0% to 0,1% mass per mass limestone.

Still further according to the invention the porosity of the ammonium nitrate can be enhanced further by the inclusion of gas in the ammonium nitrate during the prilling process.

Applicant has found that the passages created in such a prilled ammonium nitrate by the inclusion of gas can improve the porosity of such product without unduly effecting its mechanical strength.

Further according to the invention the gas is developed in situ in the ammonium nitrate via a suitable chemical reaction.

Still further according to the invention the gas comprises carbon dioxide which is formed through the decomposition of a suitable carbonate in acid medium.

The carbonate may comprise any suitable water soluble inorganic salt of carbonic acid, such as, for example, potassium and/or sodium carbonate or, alternatively, it may comprise a less soluble salt.

It will be appreciated that the porous prilled ammonium nitrate invariably contains some acidity which reacts with the added carbonate to yield carbon dioxide.

Preferably the carbonate comprises potassium carbonate which is present in the product in a concentration of between 0,01 to 1,00% (mass/mass.)

Applicant has found that the potassium nitrate which is formed in the reaction between the added potassium carbonate and nitric acid present in ammonium nitrate acts as a crystal habit modifier for the ammonium nitrate, thus imparting increased mechanical strength to the ammonium nitrate and increasing the transition temperature (32 degrees C) of the crystal transition between the II crystal form and the III crystal form.

Still further according to the invention the prilled ammonium nitrate may include colloidal silica which serves to harden the surface of the ammonium nitrate.

Further according to the invention the colloidal silica is provided by adding to the unprilled ammonium nitrate silicilic acid and/or poly-silicilic acid and/or waterglass in a sufficient concentration, preferably between 0,1 and 10% mass/mass, to ensure an acceptable friability and breaking strength.

The invention also includes within its scope an explosive composition, particularly ANFO and/or heavy ANFO, including a microsphere containing prilled ammonium nitrate product according to the invention.

Applicant has found that the aforesaid enhanced properties of such a product are retained after pneumatic loading of an ANFO-type explosive formed from the porous prill and fuel oil in the 94:6 ratio normally used for such an explosive.

According to another aspect of the invention a method of making a porous prilled product, particularly porous prilled ammonium nitrate, includes the step of adding hollow microspheres in a concentration of between 0,01 to 500 parts per million to the product during the prilling of the product.

Further according to the invention the porous prilled product comprises ammonium, nitrate.

Preferably the hollow microspheres comprise at least one of the types referred to above.

Further according to this aspect of the invention the microspheres are added at a point during the prilling process where the liquid product is divided into droplets.

Where polymer microballoons are used, such procedure serves to minimise the time that such spheres can be effected by the high temperature prevailing in the prilling process.

Where other types of microspheres are used, the aforesaid procedure serves to reduce the time during which such spheres are subjected to any aqueous acidic product which may be present.

The aforesaid points of addition may be located:
(a) in the centre of a conventional type of prilling bucket;
(b) at the stem of a nozzle prilling unit (shower head type);
(c) at the point of injection in the case of pan granulated material.

Further according to the invention the method includes the step of adding to the unprilled ammonium nitrate a carbonate and/or colloidal silica at any convenient point in the process before the prilling takes place, the gas generation from the carbonate preferably taking place in the droplet before solidification in such a way that the gas bubbles are small and uniform and that the gas evolvement is not too fast.

Thus, for example, where a conventional type of prilling nozzle or rotating bucket is used for the prilling operation, the carbonate can be introduced by means of an atomising nozzle located inside such apparatus in a position spaced between its inlet and outlet.

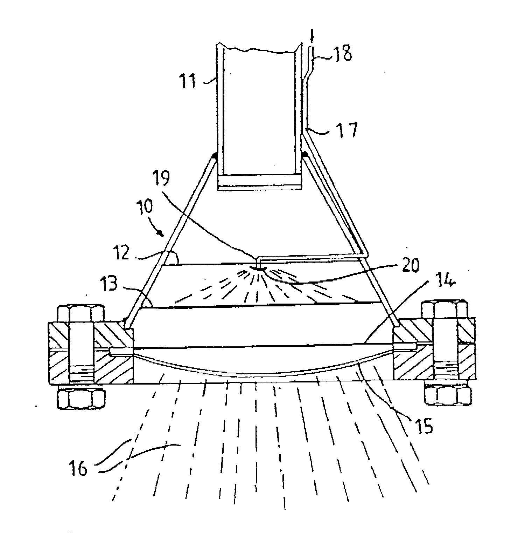

### BRIEF DESCRIPTION OF THE DRAWING

One embodiment of a method according to the invention will now be described by way of example with reference to the enclosed drawing which is a diagrammatic longitudinal section through an apparatus suitable for carrying out the method.

### DESCRIPTION OF THE PREFERRED EMBODIMENT

In this arrangement a conventional type of conically shaped (shower head) prilling nozzle 10 is employed for prilling the ammonium nitrate. Nozzle 10 has a tubular inlet 11 through which the ammonium nitrate solution to be prilled can be fed into two spaced apart transversely extending diffuser plates 12 and 13 and to pass from there via a 100 micro metre screen 14 and nozzle plate 15 as ammonium nitrate droplets 16.

Nozzle 10 is also provided with an elongated discharge tube 17 which runs down the side of nozzle 10 and which is bent over its length as indicated. Tube 17, which has its leading end passing through an aperture in nozzle 10 to the inside of nozzle 10, has an inlet 18, and an outlet 19 located inside nozzle 10. Although outlet 19, which is connected to a wide angle spray 20, is shown as being carried on the underside of diffuser plate 12, it can in fact be located in any place over the length of nozzle 10. Also, if required, the diffuser plates 12 and 13 may be omitted.

The microspheres and/or potassium carbonate solution required in the process are introduced through inlet 18 to pass down tube 17 and via outlet 19 to issue in atomised form frorn spray 20 into the ammonium nitrate spray passing from diffuser plate 12 to diffuser plate 13.

Although the silica colloid required in the process can be added to the bulk nitrate solution before prilling, the preferred method is to make a solution of the silica colloid and to add this solution either on its own or in conjunction with the carbonate solution to the prilling nozzle 10 via inlet 11.

This late addition in the prilling process prevents gelling of the silica colloid and blockages in process equipment.

The prill which is formed comprises a crystalline matrix of ammonium nitrate in which the microspheres are incorporated.

Table 1 reflects some of the properties found with a product according to the invention.

**TABLE 1**

| Microspheres in parts per million | Prill Density in g/cm³ | Breaking Strength⁽¹⁾ in Kg | Friability⁽²⁾ (%) | Density After Loading⁽³⁾ in g/cm³ |
|---|---|---|---|---|
| 0 (Standard) | 0,760 | 1,1 | 2,4 | 1,05 |
| 2⁽⁴⁾ | 0,760 | 1,1 | 2,5 | 1,04 |

| | | | | |
|---|---|---|---|---|
| Notes: (1) This is the load in kilograms required to break a prill. | | | | |
| (2). This represents the resistance of the prills to abrasion caused by an air steam and is expressed as the percentage of prill breakages caused by the resulting abrasion forces. | | | | |
| (3). This expresses the increased density of the prills when an explosive composition containing the prills are pneumatically loaded into a bore hole. | | | | |
| (4). It will be noted that the bulk physical properties of the prill are almost unchanged by the addition of 2ppm of microspheres. | | | | |

The product according to the invention can be used in conventional manner to manufacture a typical 94:6 ANFO - type explosive composition.

Table 2 reflects the detonation results obtained with such an explosive composition.

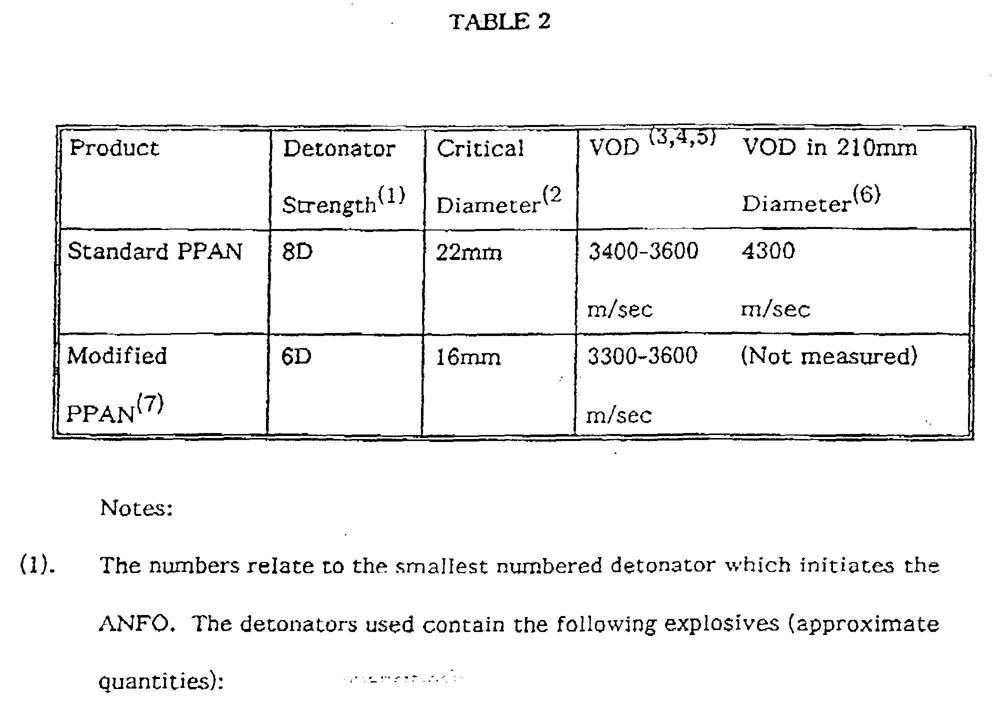

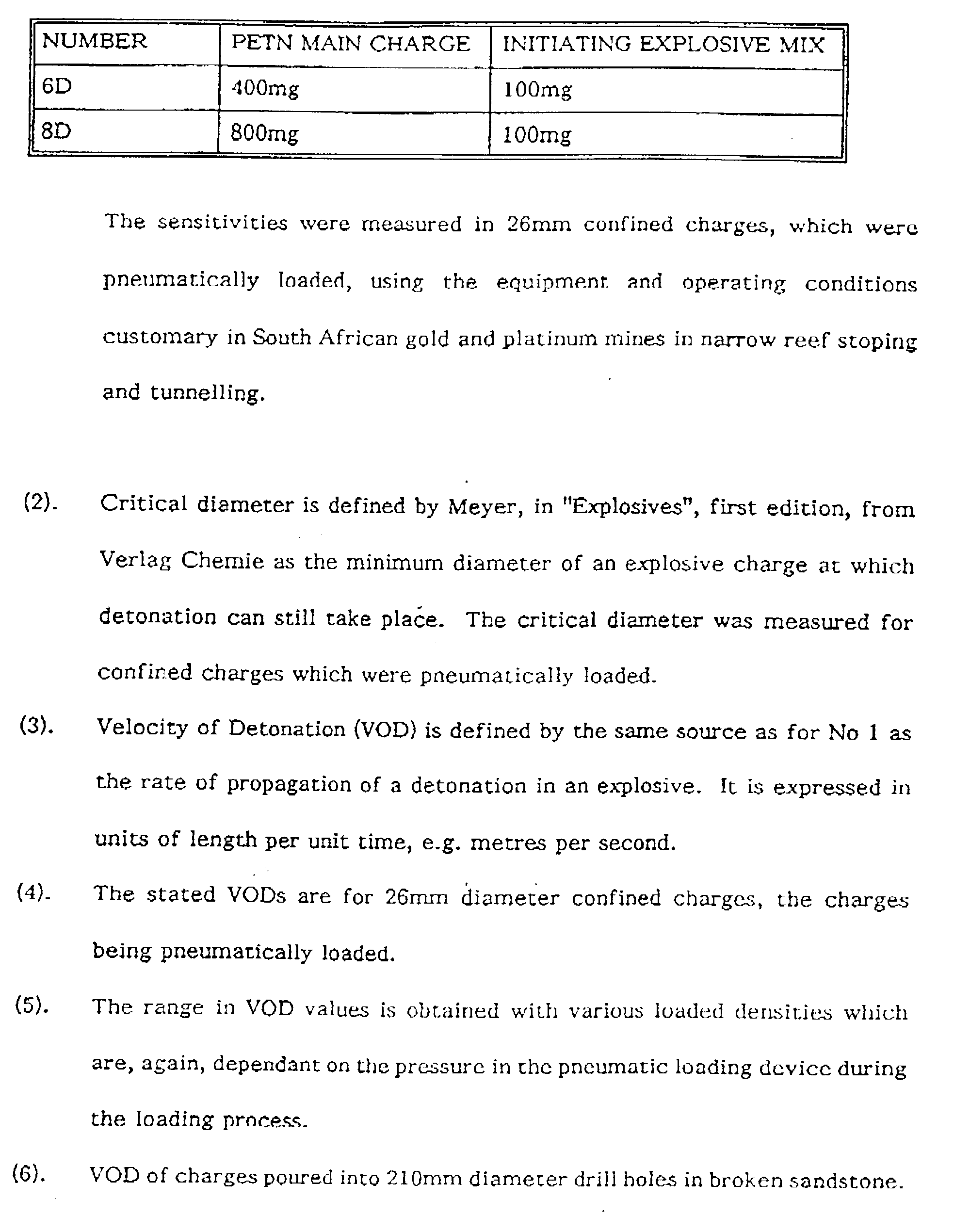

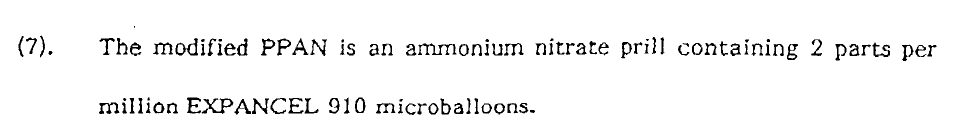

It will be noted from Table 2 that the sensitivity to initiation is higher than that of the standard, under the charging conditions used during evaluation, and that the critical diameter of the product is smaller. The velocity of detonation of the composition according to the invention is generally also lower than that of the standard.

Sensitivity to mechanical handling was tested by methods in accordance with those recommended by the United Nations, relating to the Transportation of Dangerous Goods, and the product according to the invention was found to be comparable with the standard.

Applicant has found that a safe and highly efficient low cost ANFO explosive is provided according to the invention which shows enhanced sensitivity to initiation and consistent detonation velocities over a wide range of blast hole diameters and pneumatic loading pressures. One of the key benefits obscured during the use of such an explosive in underground mines is markedly improved roof conditions and hence a safer work environment. In surface applications, superior blasting results are observed, especially when used in demanding applications, such as blasting in deep holes or in highly fractured or extremely competent materials

Also, in the case of heavy ANFO, the enhanced detonation sensitivity of the product according to the invention offers an advantage over the known systems. This is so because the performance of heavy ANFO systems is vitally dependant upon the sensitivity of the blend when exposed to static and dynamic pressures.

It will be appreciated that there are no doubt many variations in detail possible with a novel product and method according to the invention without departing from the spirit and/or scope of the claims.

## Claims

1. A porous prilled product, particularly porous prilled ammonium nitrate, in the form of a crystalline matrix which has hollow microspheres incorporated in the matrix in a concentration of from 0,01 to 500 parts per million.

2. The porous prilled product of claim 1 which comprises ammonium nitrate.

3. The product of claims 1 or 2 in which the microspheres comprise at least one of the following; polymer balloons; glass balloons; hollow metal spheres; natural porous products such as Perlite; cenospheres such as fly ash floats, or the like.

4. The product of any one of the preceding claims in which the microspheres have the following physical properties in the final product:
Size : 5 - 1500 micro metre.
Density range : 0,015 - 0,39 gram per cm³.
Temperature stability : Stable at process temperatures of 130-170°C for a sufficient time to effect prilling during the prilling process.
Breaking strength : Able to withstand at least a 100 kg/cm² force, or able to regain its shape after impact deformation.

5. The product of any one of the preceding claims in which the microspheres comprise polymer microballoons of which the size in the prilled product is between 2,0 and 150 microns.

6. The product of any one of the preceding claims in which the microspheres comprise the product known in the market as Expancel 910.

7. The product of any one of the preceding claims which also includes lime stone.

8. The product of claim 7 which includes from 70,0% to 99,9% (mass per mass) ammonium nitrate and from 30,0% to 0,1% (mass per mass) limestone.

9. The product of any one of the preceding claims which has been gassed during the prilling of the ammonium nitrate.

10. The product of claim 9 wherein the gas is developed in situ in the ammonium nitrate via a chemical reaction.

11. The product of claims 9 or 10 wherein the gas comprises carbon dioxide which is formed through the decomposition of a carbonate in acid medium.

12. The product of claim 1 wherein the carbonate comprises potassium carbonate which is present in the product in a concentration of between 0,01 to 1,00% (mass/mass).

13. The product of any one of the preceding claims which includes colloidal silica.

14. The product of claim 13 wherein the colloidal silica is provided by adding to the unprilled ammonium nitrate silicilic acid and/or polysilicilic acid and/or waterglass in a sufficient concentration, preferably between 0,1 and 10% mass/mass, to ensure an acceptable friability and breaking strength.

15. An explosive composition, particularly ANFO and/or heavy ANFO, including the product of any one of the preceding claims.

16. A method of making a porous prilled product, particularly porous prilled ammonium nitrate, which includes the step of adding hollow microspheres in a concentration of between 0,01 to 500 parts per million to the product during the prilling of the product.

17. The method of claim 16 wherein the microspheres comprise at least one of the following: polymer balloons; glass balloons; hollow metal spheres; natural porous products such as Perlite; cenospheres such as fly ash floaters, or the like.

18. The method of claims 16 or 17 wherein the microspheres are added at a point during the prilling process where the liquid product is divided into droplets.

19. The method of claim 18 wherein the point of addition may comprise any one of the following:
(a) in the centre of a conventional type of prilling bucket;
(b) at the stem of a nozzle prilling unit (shower head type);
(c) at the point of injection in the case of pan granulated material.

20. The method of any one of claims 16 to 19 which includes the step of adding to the unprilled ammonium nitrate a carbonate and/or colloidal silica at any convenient point in the process before the prilling takes place, the gas generation from the carbonate preferably taking place in the droplet before solidification in such a way that the gas bubbles are small and uniform and that the gas evolvement is not too fast.

21. A porous prilled product substantially as herein described with reference to the example.

22. An explosive composition such as ANFO and/or heavy ANFO including the porous prilled product of claim 21.

23. A method of making a porous prilled product substantially as herein described with reference to the example, and/or drawing.
